# EUROPÄISCHE PATENTSCHRIFT

(11) **EP 1 837 368 B1**
(45) Veröffentlichungstag und Bekanntmachung des Hinweises auf die Patenterteilung: **14.05.2014**
(21) Anmeldenummer: 07104767.4
(22) Anmeldetag: 23.03.2007
(51) Int. Cl.: C08K 3/22, C08K 3/26, C08K 3/32, C08J 3/215, C08J 3/22, C08L 21/00

(54) **Zusammensetzung mit Zinkhydroxid, Mischung enthaltend die Zusammensetzung und Artikel daraus**
Composition containing zinc hydroxide, blend containing the composition and article made thereof
Composition contenant de l'hydroxide de zinc, mélange comprenant la composition et article à base de ce mélange

(30) Priorität: 23.03.2006 EP 06111635
(43) Veröffentlichungstag der Anmeldung: 26.09.2007
(73) Patentinhaber: Grillo Zinkoxid GmbH, 38611 Goslar-Oker (DE)
(72) Erfinder: Rennar, Nikolaus, 97294, Unterpleichfeld (DE); Jahn, Burkhardt, 38667, Bad Harzburg (DE); Hessdörfer, Sven, 97753. Karlstadt/Main (DE)
(74) Vertreter: Von Kreisler Selting Werner - Partnerschaft von Patentanwälten und Rechtsanwälten mbB

(56) Entgegenhaltungen:
- EP-A- 1 505 115
- DE-A1- 19 815 453
- GB-A- 239 173
- GB-A- 1 447 115

## Beschreibung

Die Erfindung betrifft eine Zusammensetzung mit Zinkhydroxid, Mischungen enthaltend die Zusammensetzung, ein Verfahren zur Herstellung der Zusammensetzung, Artikel aus der erfindungsgemäßen Mischung sowie die Verwendung von nicht calziniertem Zinkhydroxid.

Aufgrund ihres technologisch interessanten Eigenschaftsbildes nehmen Elastomere eine Schlüsselstellung unter den verschiedenen Werkstoffgruppen ein. In weiten Grenzen reversibel deformierbare Gummimaterialien mit mittlerem Leistungsspektrum, d.h. chemisch weitmaschig vernetzte Polymere, lassen sich im einfachsten Fall üblicherweise durch "Vulkanisation" von Dienkautschuken herstellen. "Vulkanisation" bezeichnet dabei eine spezielle Art der Vernetzung, wodurch die einzelnen miteinander verschlauften, chemisch aber unvernetzten Makromoleküle des plastischen Kautschuks weitmaschig über mehratomige Schwefelbrücken kovalent miteinander verbunden werden.

Das älteste und zugleich immer noch wichtigste Vulkanisiermittel ist nach wie vor Schwefel. Zur Erreichung bestimmter mechanischer Festigkeitswerte, chemischer und dynamisch-mechanischer Eigenschaften, aber auch zur Beschleunigung der eigentlichen Vernetzungsreaktion ist der Zusatz von organischen Vulkanisationsbeschleunigern, -aktivatoren und Fettsäuren sowie von weiteren Kautschukadditiven (Füllstoffe, Weichmacher, Verarbeitungshilfsmittel, Alterungsschutzmittel) jedoch unerlässlich. Von großem Vorteil für den industriellen Einsatz des Vulkanisationsverfahrens ist die relative Unempfindlichkeit der (beschleunigten) Schwefelvernetzung gegenüber den meisten Mischungsbestandteilen sowie gegenüber Wasser und Sauerstoff. Darüber hinaus sind für dieses Verfahren charakteristisch die hohe Wirtschaftlichkeit des Prozesses und die hervorragende Regelbarkeit der Vulkanisationsgeschwindigkeit mittels Beschleuniger und Verzögerer und mittels der relativ leicht einzustellenden Verfahrensparameter Vernetzungstemperatur und Vernetzungsdauer. Die Möglichkeit, durch Art und Menge der Beschleuniger sowie durch die Schwefeldosierung zugleich die Länge und die Struktur der Vernetzungsbrücken zu beeinflussen, ist für dieses Verfahren weiterhin von Bedeutung. So kann man z.B. entweder die Bildung von vorwiegend polysulfidischen Vernetzungsbrücken mit guten elastischen Eigenschaften und hoher Zugfestigkeit der Vulkanisate oder von vorwiegend mono- bzw. disulfidischen Vernetzungsbrücken mit guter Wärmebeständigkeit der Vulkanisate erreichen. Dem Fachmann sind Kenntnisse über die Optimierung eines gegebenen Schwefel-Beschleuniger-Systems unter Berücksichtigung von Verarbeitungssicherheit, Vulkanisationsdauer und -temperatur, Vernetzungsart und gewünschter technologischer Eigenschaften geläufig.

Der Mechanismus der Schwefelvulkanisation ist bis heute Gegenstand zahlreicher Untersuchungen. Prinzipiell muss zwischen der technologisch wenig bedeutenden beschleunigerfreien und der technisch relevanten beschleunigten Vulkanisation unter Verwendung von Schwefel-Beschleuniger-Systemen und Aktivatoren unterschieden werden. Es ist bekannt, dass Metalloxide in Verbindung mit Fettsäuren aktivierend auf Schwefel-Beschleuniger-Systeme wirken. Häufig verwendet man Zinkoxid als Aktivator, aber auch Bleioxid und Magnesiumoxid werden eingesetzt. Die Rolle des Zinkoxids beschränkt sich dabei jedoch nicht nur auf die Rolle eines Vulkanisationsaktivators bei der Schwefelvernetzung; ZnO kann u.U. auch noch folgende Funktionen erfüllen:
- Vernetzungsmittel für halogenhaltige Kautschuke,
- Vernetzungsmittel für Carboxylgruppen-haltige Polymere ("Salzvernetzung"),
- Säurefänger bei der Peroxid-Vernetzung,
- heller Füllstoff zur Verbesserung der elastischen Eigenschaften und der Hitzebeständigkeit bei dynamischer Belastung.

Obwohl die kautschukverarbeitende Industrie Zinkoxid nur in moderaten Dosierungen und in Kombination mit Fettsäuren seit Jahrzehnten erfolgreich bei der Vulkanisation von Kautschuken einsetzt, werden in jüngster Zeit Forderungen nach einer Reduzierung des Zinkoxidgehaltes in Gummiartikeln wegen einer potentiellen Umweltbelastung mit diesem Schwermetall immer lauter.

GB-A-1 447 115 und GB-A-239 173 beschreiben die Verwendung von Zinkhydroxid als Vulkanisationsaktivator. DE-A-198 15 453 beschreibt pulverförmige füllstoffhaltige Kautschuke, die auch nach einer mechanischen Belastung rieselfähig bleiben und ein Verfahren zu deren Herstellung, bei dem man das Kautschukpulver innerhalb von zwei Fällungsschritten gewinnt. Die EP-A-1 505 115 offenbart eine die Zusammensetzung die nanoskalige Zinkoxidpartikel enthält.

Das der Erfindung zugrunde liegende technische Problem bestand darin, einen Vulkanisationsaktivator zur Verfügung zu stellen, der mit geringeren Schwermetallmengen belastet ist. Der bereitzustellende Vulkanisationsaktivator soll weiterhin die folgenden Eigenschaften aufweisen:
- hohe vulkanisationsaktive Wirksamkeit,
- keine negative Beeinflussung des Alterungsverhaltens der Vulkanisate,
- leichte Dosierbarkeit,
- gute Dispergierbarkeit in der Kautschukmischung,
- keine Stippenbildung,
- keine bzw. geringe Staubentwicklung,
- chemische Beständigkeit,
- gute Lagerfähigkeit auch bei höheren Umgebungstemperaturen.

Insbesondere soll der Vulkanisationsaktivator in Form von Masterbatchen bereitzustellen sein.

Gelöst wird das der Erfindung zugrunde liegende Problem durch eine Zusammensetzung enthaltend:
a) wenigstens eine Polymerkomponente ausgewählt aus der Gruppe bestehend aus einem Dienkautschuk,
   wenigstens einem Bipolymer eines konjugierten Diens und einer aromatischen Vinylverbindung,
   einem Bipolymer eines konjugierten Diens und eines monoolefinischen Monomers, ein entsprechendes Terpolymer oder Kombinationen davon,

   wobei das Terpolymer aus einem Dien, einer aromatischen Vinylverbindung und einem monoolefinischen Monomer erhältlich ist, sowie
b) Zinkhydroxid erhältlich dadurch, dass
c) zu einer alkalischen Zinkat-Lösung eine Polymer-Dispersion hinzugesetzt wird und Zinkhydroxid sowie Kautschuk gemeinsam ausgefällt werden.

Die erfindungsgemäße Zusammensetzung kann in Form eines Masterbatches als Vulkanisationsaktivator in der Kautschukindustrie formuliert werden. Die erfindungsgemäße Zusammensetzung kann für die Herstellung und den Einsatz von Masterbatchen aus einem kautschukartigen Polymer und nasschemisch gewonnenem Zinkhydroxid eingesetzt werden, die als Vulkanisationsaktivatoren mit effizienterer Vernetzungscharakteristik bei der beschleunigten Schwefelvernetzung von Dienkautschuken dienen und somit zu einer Verminderung der potentiellen Umweltbelastung durch Schwermetalie führen.

Im Gegensatz zur GB-A-1 447 115 und GB-A-239 173 wird erfindungsgemäß eine Polymerdispersion bzw. ein Latex zu einer alkalischen Zinklösung gegeben und die gemeinsame Ausfällung mit den Zinkverbindungen verlangt. Diese Zinkverbindungen weisen auf Grund des Herstellungsverfahrens keine wesentlich größere spezifische BET-Oberfläche und keine sehr kleinen Partikel auf.

In einer Ausführungsform der erfindungsgemäßen Zusammensetzung enthält diese als Bipolymer ein konjugiertes Dien und eine aromatische Vinylverbindung, ein konjugiertes Dien und ein monoolefinisches Monomer, ein entsprechendes Terpolymer oder Kombinationen davon, wobei das Terpolymer aus einem Dien, einer aromatischen Vinylverbindung und einem monoolefinischen Monomer erhältlich ist.

Erfindungsgemäß kann der Dienkautschuk aus Dienkautschuk-Monomeren aufgebaut sein, die ausgewählt sind aus der Gruppe bestehend aus Butadien-(1,3), Isopren, 2,3-Dimethyl-butadien-(1,3), Chloropren, Pentadien-(1,3), Hexadien und Gemischen davon.

Die aromatischen Vinyl-Monomere können ausgewählt sein aus der Gruppe bestehend aus Styrol, α-Methyl-styrol, p-Methyl-styrol, o-Methyl-styrol, p-Butyl-styrol, Vinylnaphthalin und Gemischen davon.

Als mono-olefinisches Monomer kann erfindungsgemäß eingesetzt werden ein Monomer, das ausgewählt ist aus der Gruppe bestehend aus Acrylnitril, Methacrylnitril und Gemischen davon.

Die erfindungsgemäße Zusammensetzung weist z.B. 10 bis 90 Gewichtsteile Polymer, insbesondere 40 bis 60 Gewichtsteile Polymer und 90 bis 10 Gewichtsteile Zinkhydroxid, insbesondere 60 bis 40 Gewichtsteile Zinkhydroxid auf.

Üblicherweise kann die erfindungsgemäße Zusammensetzung in Form von Fellen und/oder Pellets zubereitet werden, wenn diese als Masterbatch eingesetzt wird. Masterbatche haben den Vorteil einer standardisierten Zusammensetzung, was im industriellen Fertigungsprozess zu einer einfachen Handhabung führt.

Erfindungsgemäß beansprucht wird auch ein Verfahren zur Herstellung der erfindungsgemäßen Zusammensetzung. Dabei wird zu einer alkalischen Zinkat-Lösung eine Polymer-Dispersion hinzugesetzt und Zinkhydroxid sowie Kautschuk (wenn Latex eingesetzt) ausgefällt.

In einer Ausgestaltung des erfindungsgemäßen Verfahrens wird eine verdünnte wässrige alkalische Zinkat-Lösung mit einem Zinkgehalt von 0,4-1,6 mol/l eingesetzt. Als Polymerdispersion wird z.B. ein Polymerlatex mit einem Feststoffanteil von 3-30 Gew.-%, insbesondere 3-10 Gew.-% eingesetzt.

In einer besonderen Ausgestaltung des erfindungsgemäßen Verfahrens werden unter Rühren durch Absenkung des pH-Wertes Zinkhydroxid sowie Kautschuk in fein verteilter Form simultan ausgefällt. Die Absenkung des pH-Wertes erfolgt beispielsweise durch Zugabe einer Brönsted-Säure oder durch Einleiten von Kohlendioxid-Gas. Die Brönsted-Säure ist dabei z.B. ausgewählt aus der Gruppe bestehend aus Salzsäure, Schwefelsäure, Phosphorsäure oder Essigsäure.

Gegenstand der Erfindung ist ebenfalls eine vulkanisierbare Mischung, die die erfindungsgemäße Zusammensetzung umfasst. Im Besonderen enthält die erfindungsgemäße vulkanisierbare Mischung
a) die erfindungsgemäße Zusammensetzung,
b) wenigstens einen weiteren Matrix-Kautschuk,
c) Vernetzungsmittel,
d) gegebenenfalls Füllstoffe,
e) gegebenenfalls Weichmacher,
f) gegebenenfalls Alterungsschutzmitteln,
g) gegebenenfalls weitere Kautschukadditive.

Der weitere Matrix-Kautschuk ist beispielsweise ein Dienkautschuk und/ oder Dienkautschuk-Copolymer.

Die erfindungsgemäße Mischung ist z.B. mit 100 Gewichtsteilen Matrixkautschuk, 0,5-10 Gewichtsteilen der Zusammensetzung nach einem der Ansprüche 1 bis 7, 0-90 Gewichtsteilen Füllstoffe, 0-50 Gewichtsteilen Weichmacher versehen.

Das Vernetzungsmittel ist beispielsweise Schwefel oder ein Schwefelspender und Gemische davon.

In einer Ausführungsform der Erfindung ist der Füllstoff ein fein verteilter schwarzer oder heller, aktiver Füllstoff. Eine feine Verteilung der Füllstoffe wird dadurch erreicht, dass Füllstoffperlen und Agglomerate während des Mischprozesses aufgebrochen, mit Polymer durchdrungen und beispielsweise durch disperses und distributives Mischen die resultierenden 20-350 nm großen Aggregate homogen in der Kautschukmischung verteilt werden. Ein aktiver (verstärkender) Füllstoff kann dabei durch die Wechselwirkung mit der Kautschukmatrix dis Viskosität der Mischung beträchtlich erhöhen und verbessert ebenfalls das Bruchverhalten des Vulkanisates. So wird regelmäßig bei inaktiven Füllstoffen mit steigendem Füllstoffanteil eine stetige Abnahme, bei aktiven Füllstoffen jedoch ein Maximum der Bruchenergiedichte (Integral der Spannungs-Dehnungskurve) beobachtet.

Das Alterungsschutzmittel für die erfindungsgemäße Mischung ist z.B. ausgewählt aus der Gruppe bestehend aus p-Phenylendiamin-Derivaten, Dihydrochinolin-Derivaten, Naphthylamin-Derivaten, Diphenylamin-Derivaten, Benzimidazol-Derivaten, Bisphenol-Derivaten und Monophenol-Derivaten.

Der Weichmacher für die erfindungsgemäße Mischung ist beispielsweise ausgewählt aus der Gruppe bestehend aus aromatischen, naphthenischen, paraffinischen Mineralölweichmachern sowie synthetischen Weichmacherölen wie z.B. Ester-, Ether- und Polymerweichmacher und halogenierten Paraffinen.

Die weiteren üblichen Kautschukadditive können ausgewählt sein aus der Gruppe bestehend aus Verarbeitungshilfen wie z.B. Seifen, Wachse, Harze; sonstige Zusätze wie z.B. Farbstoffe, Treibmittel, Flammschutzmittel, Haftmittel, Antistatika; Vulkanisationsbeschleuniger, Vulkanisationsverzögerer.

Gegenstand der Erfindung ist auch ein Verfahren zur Herstellung der erfindungsgemäßen Mischung, wobei die Komponenten auf Mischapparaturen wie z.B. Innenmischer, Walzwerk, Extruder prozessiert werden.

Gegenstand der Erfindung sind ferner Artikel erhältlich durch Vulkanisieren der erfindungsgemäßen vulkanisierbaren Mischung.

Beispielsweise können als Artikel gemäß der Erfindung Fahrzeugreifen, Förderbänder, Riemen, Federungselemente, Profile, Dichtungen, Schläuche, Bladder, Walzen, medizinische Artikel, Sportartikel, Gummischuhe und -sohlen, Kabel hergestellt werden.

Auch die Verwendung der erfindungsgemäßen Mischung für die Herstellung von Fahrzeugreifen, technischen Gummiartikeln ist Gegenstand der Erfindung sowie die Verwendung von nicht calziniertem Zinkhydroxyd als Vulkanisationsaktivator wird in des Beschreibung des vorliegenden Erfindung offenbart. Die Erfindung wird anhand der folgenden Beispiele näher erläutert.

### Beispiel 1:

100 g Zinkoxid werden mit 400 ml entionisiertem Wasser aufgeschlämmt und unter Rühren und gegebenenfalls unter Erwärmen portionsweise mit der 1,5-2 fachen äquimolaren Menge halbkonzentrierter Schwefelsäure versetzt; evtl. ungelöste Anteile trennt man durch Filtration ab. Zu der entstandenen klaren Zinksalzlösung lässt man nun unter intensivem Rühren konzentrierte (12,5-molare) Natronlauge aus einem Tropftrichter einfließen, bis die Lösung einen pH-Wert von 7 aufweist. Der sich bildende amorphe Niederschlag wird abgenutscht, mit entionisiertem Wasser erneut aufgeschlämmt und abermals abgetrennt. Diese Prozedur wird so oft wiederholt, bis das Waschwasser mit Bariumchloridlösung keine Trübung mehr zeigt. Der abgenutschte, noch feuchte Filterkuchen wird jetzt in wenig Wasser aufgeschlämmt. Unter intensivem Rühren und gegebenenfalls unter gelindem Erwärmen wird so viel konzentrierte ( 12,5-molare) Natronlauge hinzugegeben, bis sich der gesamte Feststoff nahezu vollständig aufgelöst hat; eventuell vorhandene unlösliche Anteile trennt man durch Filtrieren ab. 1300 ml der so gewonnenen alkalischen, 0,7-molaren Zinklösung werden nun sukzessive unter intensivem Rühren mit 785 ml eines verdünnten ölfreien Styrol-Butadien-Latex (Feststoffanteil 7 Gew.-%) vermischt; durch anschließende Zugabe von halbkonzentrierter Schwefelsäure wird der pH-Wert auf < 6 abgesenkt. Bei optimaler Arbeitsweise bildet sich ein feinteiliger amorpher Niederschlag, der durch Filtration oder durch Zentrifugieren von der überstehenden Lösung abgetrennt und mehrmals gründlich ausgewaschen wird. Der anschließend bei 70 °C im Vakuumtrockenschrank sorgfältig getrocknete Feststoff wird im letzten Verarbeitungsschritt auf einem Walzwerk (gegebenenfalls unter Zusatz von 5-10 Gew.-% eines Weichmacheröls) zu einem zusammenhängenden Mischungsfell kompaktiert und bei Bedarf pelletiert.

### Beispiel 2:

100 g Zinkoxid werden mit der doppelten Menge gepulvertem Natriumcarbonat (alternativ einer 1:1-Mischung aus gepulvertem Natriumcarbonat und Kaliumcarbonat) intensiv vermischt und in einem feuerfesten Tiegel bei einer Temperatur von 1000 - 1100 °C in einem Muffelofen zwölf Stunden lang geglüht. Das abgekühlte, mechanisch zerkleinerte Sinterprodukt wird wiederholt mit heißer Natronlauge ausgelaugt und der ungelöste Rückstand durch Filtrieren abgetrennt. 900 ml der so gewonnenen alkalischen, 0,7-molaren Zinklösung werden nun sukzessive unter intensivem Rühren mit 785 ml eines verdünnten Naturkautschuk-Latex (4 Gew.-% Feststoffanteil) vermischt; durch anschließendes Einleiten von Kohlendioxidgas wird der pH-Wert auf < 6 abgesenkt. Der gebildete feinteilige amorphe Niederschlag wird durch Filtration oder durch Zentrifugieren von der überstehenden Lösung abgetrennt und mehrmals ausgewaschen. Der noch feuchte Feststoff wird anschließend bei 70 °C im Vakuumtrockenschrank getrocknet und (bei Bedarf unter Zusatz von 5-10 Gew.-% eines Weichmacheröls) zu einem zusammenhängenden Mischungsfell kompaktiert sowie gegebenenfalls pelletiert.

### Beispiel 3:

100 g Zinkoxid werden mit 120 g gepulverten Natriumhydroxid intensiv vermischt und in einem feuerfesten Tiegel mit Deckel drei Stunden lang mittels eines Gebläses oder in einem Muffelofen so erhitzt, dass ein klarer Schmelzfluss entsteht. Der erkaltete Schmelzkuchen wird mechanisch zerkleinert, wiederholt mit kochendem Wasser ausgelaugt und vom ungelösten Rückstand abfiltriert. 1100 ml der so gewonnenen alkalischen Zinklösung werden nun sukzessive unter intensivem Rühren mit 800 ml eines verdünnten Acrylnitril-Butadien-Latex (Feststoffanteil < 10 Gew.- %) vermischt; durch anschließendes Einleiten von Kohlendioxidgas wird der pH-Wert auf < 5,5 abgesenkt. Es bildet sich ein feinteiliger amorpher Niederschlag, der durch Filtration oder durch Zentrifugieren von der überstehenden Lösung abgetrennt und mehrmals gründlich ausgewaschen wird. Der noch feuchte Feststoff wird anschließend bei 70 °C im Vakuumtrockenschrank getrocknet und (bei Bedarf unter Zusatz von 5-10 Gew.-% eines Weichmacheröls) zu einem zusammenhängenden Mischungsfell kompaktiert und gegebenenfalls pelletiert.

## Patentansprüche

1. Zusammensetzung enthaltend:
a) eine Polymerkomponente ausgewählt aus der Gruppe bestehend aus wenigstens einem Dienkautschuk,
wenigstens ein Bipolymer eines konjugierten Diens und einer aromatischen Vinylverbindung,
ein Bipolymer eines konjugierten Diens und einem monoolefinischen Monomer,
ein entsprechendes Terpolymer oder Kombinationen davon,
wobei das Terpolymer aus einem Dien, einer aromatischen Vinylverbindung und einem monoolefinischen Monomer erhältlich ist, sowie
b) Zinkhydroxid,
erhältlich dadurch, dass
c) zu einer alkalischen Zinkat-Lösung eine Polymer-Dispersion hinzugesetzt wird und Zinkhydroxid, sowie Kautschuk gemeinsam ausgefällt werden.

2. Zusammensetzung nach Anspruch 1, wobei der Dienkautschuk aus Dienkautschuk-Monomeren aufgebaut ist, die ausgewählt sind aus der Gruppe bestehend aus Butadien-(1,3), Isopren, 2,3-Dimethyl-butadien-(1,3), Chloropren, Pentadien-(1,3), Hexadien und Gemischen davon.

3. Zusammensetzung nach Anspruch 1 und 2, wobei die aromatischen Vinyl-Monomere des Bipolymers ausgewählt sind aus der Gruppe bestehend aus Styrol, α-Methyl-styrol, p-Methyl-styrol, o-Methyl-styrol, p-Butyl-styrol, Vinylnaphthalin und Gemischen davon.

4. Zusammensetzung nach mindestens einem der Ansprüche 1 bis 3, wobei das monoolefinisch Monomer des Bipolymers ausgewählt ist aus der Gruppe bestehend aus Acrylnitril, Methacrylnitril und Gemischen davon.

5. Zusammensetzung nach mindestens einem der Ansprüche 1 bis 4 mit 10 bis 90 Gewichtsteilen Polymer, insbesondere 40 bis 60 Gewichtsteilen Polymer und 90 bis 10 Gewichtsteilen Zinkhydroxid, insbesondere 60 bis 40 Gewichtsteilen Zinkhydroxid.

6. Zusammensetzung nach mindestens einem der Ansprüche 1 bis 5 in Form von Fellen und/oder Pellets.

7. Verfahren zur Herstellung der Zusammensetzung nach mindestens einem der Ansprüche 1 bis 6 **dadurch gekennzeichnet, dass** zu einer alkalischen Zinkat-Lösung eine Polymer-Dispersion hinzugesetzt wird und Zinkhydroxid sowie Kautschuk ausgefällt werden.

8. Verfahren nach Anspruch 7, wobei eine verdünnte wässrige alkalische Zinkat-Lösung mit einem Zinkgehalt von 0,4 - 1,6 mol/l eingesetzt wird.

9. Verfahren nach Anspruch 7 und/oder 8, wobei als Polymerdispersion ein Polymerlatex mit einem Feststoffanteil von 3 - 30 Gew.-%, insbesondere 3 - 10 Gew.-% eingesetzt wird.

10. Verfahren nach mindestens einem der Ansprüche 7 bis 9, wobei unter Rühren durch Absenkung des pH-Wertes Zinkhydroxid sowie Kautschuk in fein verteilter Form im Wesentlichen simultan ausgefällt werden.

11. Verfahren gemäß Anspruch 10, wobei die Absenkung des pH-Wertes durch Zugabe einer Brönsted-Säure oder durch Einleiten von Kohlendioxid-Gas erfolgt.

12. Verfahren gemäß Anspruch 11, wobei die Brönsted-Säure ausgewählt ist aus der Gruppe bestehend aus Salzsäure, Schwefelsäure, Phosphorsäure oder Essigsäure.

13. Vulkanisierbare Mischung enthaltend:
a) die Zusammensetzung gemäß mindestens einem der Ansprüche 1 bis 6,
b) wenigstens einen weiteren Matrix-Kautschuk,
c) Vernetzungsmittel,
d) gegebenenfalls Füllstoffe,
e) gegebenenfalls Weichmacher,
f) gegebenenfalls Alterungsschutzmitteln,
g) gegebenenfalls weitere Kautschukadditive.

14. Mischung nach Anspruch 13, wobei der weitere Matrix-Kautschuk ein Dienkautschuk und/ oder Dienkautschuk-Copolymer ist.

15. Mischung nach mindestens einem der Ansprüche 13 oder 14 mit 100 Gewichtsteilen Matrixkautschuk, 0,5 - 20 Gewichtsteilen, insbesondere 0,5 - 10 Gewichtsteilen der Zusammensetzung nach einem der Ansprüche 1 bis 7, 0 - 90 Gewichtsteilen Füllstoffe, 0-50 Gewichtsteilen Weichmacher.

16. Mischung nach mindestens einem der Ansprüche 13 bis 15, wobei das Vernetzungsmittel Schwefel, Schwefelspender und Gemische davon ist.

17. Mischung nach mindestens einem der Ansprüche 13 bis 16, wobei der Füllstoff ein fein verteilter schwarzer oder heller, aktiver Füllstoff ist.

18. Mischung nach mindestens einem der Ansprüche 13 bis 17, wobei das Alterungsschutzmittel ausgewählt ist aus der Gruppe bestehend aus p-Phenylendiamin-Derivaten, Dihydrochinolin-Derivaten, Naphthylamin-Derivaten, Diphenylamin-Derivaten, Benzimidazol-Derivaten, Bisphenol-Derivaten und Monophenol-Derivaten.

19. Mischung nach mindestens einem der Ansprüche 13 bis 18, wobei der Weichmacher ausgewählt ist aus der Gruppe bestehend aus aromatischen, naphthenischen, paraffinischen Mineralölweichmachern sowie synthetischen Weichmacherölen wie z.B. Ester-, Ether- und Polymerweichmacher und halogenierten Paraffinen.

20. Mischung nach mindestens einem der Ansprüche 13 bis 19, wobei die weiteren üblichen Kautschukadditive ausgewählt sind aus der Gruppe bestehend aus Seifen, Wachsen, Harzen als Verarbeitungshilfen; Farbstoffen, Treibmitteln, Flammschutzmitteln, Haftmitteln, Antistatika; Vulkanisationsbeschleuniger, Vulkanisationsverzögerer.

21. Verfahren zur Herstellung der Mischung gemäß mindestens einem der Ansprüche 13 bis 20, wobei die Komponenten auf Mischapparaturen wie z.B. Innenmischer, Walzwerk, Extruder prozessiert werden.

22. Artikel erhältlich durch Vulkanisieren der vulkanisierbaren Mischung gemäß mindestens einem der Ansprüche 13 bis 21.

23. Artikel gemäß Anspruch 22 ausgewählt aus der Gruppe bestehend aus Fahrzeugreifen, Förderbändern, Riemen, Federungselementen, Profilen, Dichtungen, Schläuchen, Bladdern, Walzen, medizinischen Artikeln, Sportartikeln, Gummischuhen und Gummisohlen, Kabeln.

24. Verwendung der Mischung gemäß mindestens einem der Ansprüche 13 bis 21 für die Herstellung von Fahrzeugreifen, technischen Gummiartikeln und gummierten Geweben.

## Claims

1. A composition containing:
a) a polymer component selected from the group consisting of
at least one diene rubber,
at least one bipolymer of a conjugated diene and an aromatic vinyl compound,
a bipolymer of a conjugated diene and a monoolefinic monomer,
a corresponding terpolymer or combinations thereof,
wherein the terpolymer is obtainable from a diene, an aromatic vinyl compound and a monoolefinic monomer; and
b) zinc hydroxide,
obtainable by
c) adding a polymer dispersion to an alkaline zincate solution, and precipitating zinc hydroxide and rubber together.

2. The composition according to claim 1, wherein said diene rubber is composed of diene rubber monomers selected from the group consisting of butadiene-1,3, isoprene, 2,3-dimethylbutadiene-1,3, chloroprene, pentadiene-1,3, hexadiene and mixtures thereof.

3. The composition according to claim 1 or 2, wherein said aromatic vinyl monomers of the bipolymer are selected from the group consisting of styrene, α-methylstyrene, p-methylstyrene, o-methylstyrene, p-butylstyrene, vinylnaphthalene and mixtures thereof.

4. The composition according to at least one of claims 1 to 3, wherein said monoolefinic monomer of the bipolymer is selected from the group consisting of acrylonitrile, methacrylonitrile and mixtures thereof.

5. The composition according to at least one of claims 1 to 4 with from 10 to 90 weight parts of polymer, especially from 40 to 60 weight parts of polymer, and from 90 to 10 weight parts of zinc hydroxide, especially from 60 to 40 weight parts of zinc hydroxide.

6. The composition according to at least one of claims 1 to 5 in the form of sheets and/or pellets.

7. A process for preparing the composition according to at least one of claims 1 to 6, **characterized in that** a polymer dispersion is added to an alkaline zincate solution, and zinc hydroxide as well as rubber are precipitated.

8. The process according to claim 7, wherein a diluted aqueous alkaline zincate solution having a zinc content of from 0.4 to 1.6 mol/l is employed.

9. The process according to claim 7 and/or 8, wherein a polymer latex having a solids content of from 3 to 30% by weight, especially from 3 to 10% by weight, is employed as said polymer dispersion.

10. The process according to at least one of claims 7 to 9, wherein zinc hydroxide as well as rubber are substantially simultaneously precipitated in a finely distributed form with stirring by lowering the pH value.

11. The process according to claim 10, wherein said lowering of the pH value is effected by adding a Brønsted acid or by introducing carbon dioxide gas.

12. The process according to claim 11, wherein said Bronsted acid is selected from the group consisting of hydrochloric acid, sulfuric acid, phosphoric acid or acetic acid.

13. A vulcanizable mixture, containing:
a) the composition according to at least one of claims 1 to 6;
b) at least one further matrix rubber;
c) cross-linking agents;
d) optionally fillers;
e) optionally plasticizers;
f) optionally ageing protectors;
g) optionally further rubber additives.

14. The mixture according to claim 13, wherein said further matrix rubber is a diene rubber and/or diene rubber copolymer.

15. The mixture according to at least one of claims 13 or 14 with 100 weight parts of matrix rubber, from 0.5 to 20 weight parts, especially from 0.5 to 10 weight parts, of the composition according to any of claims 1 to 7, from 0 to 90 weight parts of fillers, from 0 to 50 weight parts of plasticizer.

16. The mixture according to at least one of claims 13 to 15, wherein said cross-linking agent is sulfur, a sulfur donor or mixtures thereof.

17. The mixture according to at least one of claims 13 to 16, wherein said filler is a finely distributed black or light-colored active filler.

18. The mixture according to at least one of claims 13 to 17, wherein said ageing protector is selected from the group consisting of p-phenylene diamine derivatives, dihydroquinoline derivatives, naphthylamine derivatives, diphenylamine derivatives, benzimidazole derivatives, bisphenol derivatives, and monophenol derivatives.

19. The mixture according to at least one of claims 13 to 18, wherein said plasticizer is selected from the group consisting of aromatic, naphthenic, paraffinic mineral oil plasticizers as well as synthetic plasticizing oils, such as ester, ether and polymer plasticizers and halogenated paraffins.

20. The mixture according to at least one of claims 13 to 19, wherein said further usual rubber additives are selected from the group consisting of soaps, waxes, resins as processing aids; colorants, blowing agents, flame retardants, bonding agents, antistatic agents; vulcanization accelerators, vulcanization decelerators.

21. A process for preparing the mixture according to at least one of claims 13 to 20, wherein the components are processed with mixing apparatus, such as interior mixer, open roll mill, extruder.

22. An article obtainable by vulcanizing the vulcanizable mixture according to at least one of claims 13 to 21.

23. The article according to claim 22 selected from the group consisting of vehicle tires, conveying belts, transmission belts, spring elements, profiles, seals, flexible tubes, bladders, rolls, medical articles, sporting articles, rubber shoes and rubber soles, cables.

24. Use of the mixture according to at least one of claims 13 to 21 for the preparation of vehicle tires, technical rubber articles and rubberized fabrics.

## Revendications

1. Composition, contenant
a) un composant polymère sélectionné dans le groupe constitué d'au moins un caoutchouc diène,
au moins un bipolymère d'un diène conjugué et d'un composé vinyle aromatique,
un bipolymère d'un diène conjugué et d'un monomère monooléfinique,
un terpolymère correspondant ou des combinaisons de ceux-ci,
le terpolymère pouvant être obtenu à partir d'un diène, d'un composé vinyle aromatique et d'un monomère monooléfinique, ainsi que
b) de l'hydroxyde de zinc,
pouvant être obtenu
c) par addition d'une dispersion de polymère à une solution alcaline de zincate ainsi que par précipitation en commun d'hydroxyde de zinc et de caoutchouc.

2. Composition selon la revendication 1, le caoutchouc diène étant constitué à partir de monomères de caoutchouc diène qui sont sélectionnés dans le groupe composé de butadiène-(1,3), isoprène, 2,3-diméthyl-butadiène-(1,3), chloroprène, pentadiène-(1,3), hexadiène et de mélanges de ceux-ci.

3. Composition selon les revendications 1 et 2, les monomères vinyle aromatiques du bipolymère étant sélectionnés dans le groupe constitué de styrène, α-méthyl-styrène, p-méthyl-styrène, o-méthyl-styrène, p-butyl-styrène, napthaline vinylique et de mélanges de ceux-ci.

4. Composition selon au moins une des revendications 1 à 3, le monomère monooléfinique du bipolymère étant sélectionné dans le groupe constitué d'acrylonitrile, de méthacrylonitrile et de mélanges de ceux-ci.

5. Composition selon au moins une des revendications 1 à 4 avec 10 à 90 parties en poids de polymère, en particulier 40 à 60 parties en poids de polymère et 90 à 10 parties en poids d'hydroxyde de zinc, en particulier 60 à 40 parties en poids d'hydroxyde de zinc.

6. Composition selon au moins une des revendications 1 à 5 sous forme de feuilles et/ou de granulés.

7. Procédé de fabrication de la composition selon au moins une des revendications 1 à 6, **caractérisé en ce qu'**une dispersion de polymère est ajoutée à une solution alcaline de zincate, et **en ce que** de l'hydroxyde de zinc ainsi que du caoutchouc sont précipités.

8. Procédé selon la revendication 7, une solution alcaline aqueuse diluée de zincate étant mise en oeuvre avec une teneur en zinc de 0,4 à 1,6 mol/L.

9. Procédé selon la revendication 7 et/ou 8, un latex de polymère avec une fraction de matières solides de 3 - 30 %-poids, en particulier de 3 à 10 % en poids, étant mis en oeuvre en tant que dispersion de polymère.

10. Procédé selon au moins une des revendications 7 à 9, de l'hydroxyde de zinc ainsi que du caoutchouc étant précipités de façon essentiellement simultanée sous forme finement répartie par abaissement du pH tout en agitant.

11. Procédé selon la revendication 10, l'abaissement du pH s'effectuant par apport d'un acide de Brönsted ou par introduction de gaz dioxyde de carbone.

12. Procédé selon la revendication 11, l'acide de Brönsted étant sélectionné dans le groupe constitué d'acide chlorhydrique, d'acide sulfurique, d'acide phosphorique ou d'acide acétique.

13. Mélange vulcanisable, contenant :
a) la composition selon au moins une des revendications 1 à 6,
b) au moins un autre caoutchouc matriciel,
c) des agents de réticulation,
d) éventuellement des charges,
e) éventuellement des plastifiants,
f) éventuellement des agents de protection antivieillissement,
g) éventuellement d'autres additifs de caoutchouc.

14. Mélange selon la revendication 13, l'autre caoutchouc matriciel étant un caoutchouc diène et/ou un copolymère de caoutchouc diène.

15. Mélange selon au moins une des revendications 13 ou 14, avec 100 parties en poids de caoutchouc matriciel, 0,5 à 20 parties en poids, en particulier 0,5 à 10 parties en poids de la composition selon une des revendications 1 à 7, 0 à 90 parties en poids de charges, 0 à 50 parties en poids de plastifiants.

16. Mélange selon au moins une des revendications 13 à 15, l'agent de réticulation étant du soufre, un donneur de soufre et des mélanges de ceux-ci.

17. Mélange selon au moins une des revendications 13 à 16, la charge étant une charge active noire ou claire finement répartie.

18. Mélange selon au moins une des revendications 13 à 17, l'agent de protection antivieillissement étant sélectionné dans le groupe constitué de dérivés de la p-phénylènediamine, de dérivés de la dihydroquinoléïne, de dérivés de la naphtylamine, de dérivés de la diphénylamine, de dérivés du benzimidazole, de dérivés de bisphénol et de dérivés de monophénol.

19. Mélange selon au moins une des revendications 13 à 18, le plastifiant étant sélectionné dans le groupe constitué de plastifiants à base d'huiles minérales aromatiques, naphténiques, paraffiniques ainsi que d'huiles plastifiantes synthétiques comme par exemple des plastifiants ester, éther et polymère et des paraffines halogénées.

20. Mélange selon au moins une des revendications 13 à 19, les autres additifs habituels du caoutchouc étant sélectionnés dans le groupe constitué de savons, cires, résines en tant qu'aides au traitement ; de colorants, d'agents d'expansion, d'agents ignifuges, d'agents d'adhérence, d'agents antistatiques ; d'accélérateurs de vulcanisation, de retardateurs de vulcanisation.

21. Procédé de fabrication du mélange selon au moins une des revendications 13 à 20, les composants étant traités sur des appareillages de mélange comme par exemple un mélangeur intérieur, un laminoir, une extrudeuse.

22. Article pouvant être obtenu par vulcanisation du mélange vulcanisable selon au moins une des revendications 13 à 21.

23. Article selon la revendication 22, sélectionné dans le groupe constitué de pneus de véhicules, de bandes transporteuses, de courroies, d'éléments de suspension, de profilés, de joints d'étanchéité, de tuyaux, de réservoirs souples, de rouleaux, d'articles médicaux, d'articles de sport, de chaussures en caoutchouc et de semelles en caoutchouc, de câbles.

24. Utilisation du mélange selon au moins une des revendications 13 à 21 pour la fabrication de pneus de véhicules, d'articles techniques en caoutchouc et de tissus caoutchoutés.
